# EUROPÄISCHE PATENTANMELDUNG

(11) **EP 2 390 467 A1**
(43) Veröffentlichungstag der Anmeldung: **30.11.2011**
(21) Anmeldenummer: 10005659.7
(22) Anmeldetag: 31.05.2010
(51) Int. Cl.: F01D 5/28

(54) **Schutzschicht zur Vermeidung von Tropfenschlagerosion**

(71) Anmelder: SIEMENS AKTIENGESELLSCHAFT, 80333 München (DE)
(72) Erfinder: Ghicov, Andrei Dr., 45478 Mülheim an der Ruhr (DE); Gollerthan, Susanne Dr., 44787 Bochum (DE)

(57) **Zusammenfassung**

Die Erfindung betrifft eine Schutzschicht (7) zur Vermeidung von Tropfenschlagerosion, wobei als Material für die Schutzschicht (7) ein hydrophiles Material verwendet wird, das sich dadurch auszeichnet, dass im Betrieb ein Wasserfilm auf dem hydrophilen Material entsteht und nachfolgende Wassertropfen durch Schockabsorption eine Schädigung der Oberfläche (6) eines Substrats (14) verhindert.

## Beschreibung

Die Erfindung betrifft eine Schutzschicht zur Vermeidung von Tropfenschlagerosion, wobei die Schutzschicht ein hydrophiles Material umfasst. Des Weiteren betrifft die Erfindung ein Verfahren zur Herstellung einer Schutzschicht.

Bei Dampfturbinen wird insbesondere im Wasserdampf enthaltene Energie in mechanische Energie umgewandelt und damit ein elektrischer Generator oder auch eine Arbeitsmaschine angetrieben. Um die im Dampf gespeicherte Wärme soweit wie möglich für die Umwandlung in mechanische Energie nutzen zu können, werden Niederdruck-Dampfturbinen so betrieben, dass die Kondensation bereits in der Turbine einsetzt und so am Austritt ein stark expandierter Dampf mit typisch 10% - 16% Nässe vorliegt. Ein Teil dieses Kondensats führt zur Bildung eines Wasserfilms auf den Turbinenschaufeln der Stufen, die stromab der einsetzenden Kondensation liegen. Da die Laufschaufeln und der ggf. auf ihnen befindliche Wasserfilm rotationsbedingt erheblichen Fliehkräften ausgesetzt sind, findet eine Wasseransammlung nur auf den Leitschaufeln in signifikantem Ausmaß statt. Dieser Wasserfilm fließt - getrieben durch die Dampfströmung - an die Hinterkanten der Leitschaufeln und reißt dort in Form von Tropfen ab, die wesentlich größer sind als die primär durch Kondensation im Dampfvolumen gebildeten Primärtropfen. Weil diese Sekundärtropfen eine im Vergleich zu den Primärtropfen hohe Masse haben, können sie der Dampfströmung nur bedingt folgen (Massenträgheit) und prallen deshalb mit hohen Relativgeschwindigkeiten auf die stromab der Leitschaufel rotierenden Laufschaufeln. Dabei richten sie teilweise hohe Schäden durch Tropfenschlagerosion an.

Um letztere Schäden zu begrenzen, wurden bereits verschiedene Maßnahmen vorgeschlagen, die die auf den Leitschaufeln angesammelten Wassermengen reduzieren sollen. Diese Maßnahmen kann man in drei Kategorien einteilen:
- 1.: Maßnahmen zur Reduzierung der auf den Leitschaufeln angesammelten Wassermengen;
- 2.: Maßnahmen zur Reduzierung der Abscheidung von Wasser auf den Leitschaufeln;
- 3.: Maßnahmen zur Reduzierung der Sekundärtropfengröße

In die erste Kategorie fallen sowohl Maßnahmen zur Ableitung des Wassers durch kanalartige Strukturen nach außen (Absaugeschlitze/Absaugebohrungen) als auch Maßnahmen zur Verdampfung der Wasserfilme durch Beheizung der Leitschaufeln von innen. In die zweite Kategorie fallen Maßnahmen zur Steuerung der Kondensation im Dampfvolumen, die zur Ausbildung einer höheren Zahl kleinerer Tropfen führen, die der Strömung besser folgen können und sich deshalb nicht so schnell auf den Leitschaufeln ablagern. In die dritte Kategorie fallen sowohl Maßnahmen, die die Oberflächeneigenschaften von Leitschaufeln modifizieren als auch Maßnahmen, die durch gezielte Dampfausblasung im Bereich der Leitschaufelhinterkante eine Tropfenzerstäubung befördern.

Maßnahmen der ersten Kategorie sind nur begrenzt erfolgreich, weil Strukturen, die zur nahezu vollständigen Ableitung des Wassers von der Leitschaufel führen, sowohl die Strömung in der Dampfturbine nachhaltig beeinflussen als auch die verfügbare Menge an Arbeitsfluid reduzieren und damit den Wirkungsgrad reduzieren.

Maßnahmen zur Steuerung der Kondensation im Volumen können eine Hauptquelle der Bildung von Wasserfilmen auf Leitschaufeln beeinflussen, nämlich die Volumenkondensation. Ein Teil der so gebildeten feinsten Tröpfchen kann sich trotzdem noch auf den Leitschaufeln ansammeln. Die Oberflächenkondensation als zweite Quelle des Wassers auf den Turbinenschaufeln lässt sich durch eine Maßnahme der zweiten Kategorie nicht unterbinden. Außerdem beruht ein Teil der bisher vorgeschlagenen Maßnahmen zur Steuerung der Volumenkondensation auf dem Zusatz Ionen bildender Substanzen, die die chemische Korrosion fördern können und deshalb nicht wünschenswert erscheinen.

Die Beheizung der Leitschaufeln erfordert neben dem Einsatz geringer Mengen von höher energetischem Heizdampf einen erhöhten apparativen Aufwand, der die Kosten des Produktes Dampfturbine trotz erwiesener hoher Wirksamkeit signifikant erhöhen kann.

Bislang vorgeschlagene Maßnahmen zur Veränderung der Oberflächeneigenschaften von Leitbeschauflungen haben insbesondere Einschränkungen durch die geringe Beständigkeit z. B. von wasserabweisenden Beschichtungen. Die Dampfausblasung an der Leitschaufelhinterkante führt wie die Maßnahmen der ersten Kategorie zu einer Reduzierung der Wirkungsgrades über die Verwendung höherenergetischen Dampfes, welcher der Arbeitsumsetzung nicht mehr zur Verfügung steht.

In Strömungsmaschinen werden unter anderem Lauf- und Leitschaufeln eingesetzt. Unter der Sammelbezeichnung Strömungsmaschinen werden Wasserturbinen, Dampf- und Gasturbinen, Windräder, Kreiselpumpen und Kreiselverdichter sowie Propeller zusammengefasst. Allen diesen Maschinen ist gemeinsam, dass sie dem Zweck dienen, einem Fluid Energie zu entziehen, um damit eine andere Maschine anzutreiben oder umgekehrt einem Fluid Energie zuzuführen, um dessen Druck zu erhöhen.

In einer Dampfturbine als Ausführungsform einer Strömungsmaschine wird Dampf als Fluid verwendet. Dieses Fluid wird auch als Strömungsmedium bezeichnet. Es ist üblich, dass der Dampf zunächst in eine Hochdruckteilturbine einströmt, wobei dieser Dampf eine Temperatur von bis zu 620°C und einen Druck von bis zu 320bar aufweist. Nach der Durchströmung durch die Hochdruck-Teilturbine strömt das Strömungsmedium durch eine Mitteldruck-Teilturbine und schließlich durch eine Niederdruck-Teilturbine. Der Druck und die Temperatur des Dampfes nimmt hierbei ab. Bei der Entspannung des Dampfes in der Niederdruck-Teilturbine kann es vorkommen, dass durch spontane Kondensation sich Nebeltröpfchen bilden, die auch als Primärtröpfchen bezeichnet werden und sehr klein sind. Solche Primärtröpfchen wachsen auf Durchmesser von etwa 0,2µm an. Diese Primärtröpfchen sammeln sich auf den Leit- und Laufschaufeln an und bilden in Folge eines Wasserfilms einen größeren Sekundärtropfen mit einem Durchmesser bis etwa 400µm. Noch größere Wassertröpfchen sind in der Dampfturbinenströmung nicht stabil, da sie wieder zerstäubt werden.

Diese Tropfen verursachen die sogenannte Tropfenschlagerosion, bei der beim Aufprall eines Tropfens auf die Laufschaufel es zu einem Materialabtrag kommen kann.

Es kann zu dem vorkommen, dass für verschiedene Betriebspunkte der Niederdruck-Teilturbine, beispielsweise im Teillastbetrieb, es zu örtlich negativen Axialgeschwindigkeiten im Bereich der Laufschaufelhinterkante kommen kann. Diese Bewegung des Dampfes führt dazu, dass im Dampf enthaltene Wassertröpfchen zurück in die Beschaufelung strömen. Die Wassertröpfchen haben hierbei eine solch geringe Umfangskomponente, dass sie mit hoher Relativgeschwindigkeit auf die Hinterkante des Laufschaufelprofils auf der Saugseite treffen und somit zu deutlichen Erosionsschädigungen führen. Dies führt zu einer erheblichen Schädigung der Beschaufelung.

Um solche Schädigungen zu vermeiden ist es zum einen bekannt, die im Dampf vorhandenen Wassertropfen durch entsprechende Betriebsbereiche zu minimieren. Des Weiteren kann eine Verdickung der Schaufelhinterkanten berücksichtigt werden. Ebenso ist es bekannt, bei größeren Erosionsschädigungen im Hinterkantenbereich Schleifmaßnahmen durchzuführen. Des Weiteren ist bekannt, die Hinterkante zu härten, um die Widerstandsfähigkeit der Schaufel zu erhöhen. Schließlich ist es auch bekannt die Bildung der Sekundärtropfen mittels Absaugeinrichtungen und gezieltem Axialspaltdesign zu vermeiden.

Aufgabe der Erfindung ist es, eine verbesserte Schutzschicht zur Vermeidung von Tropfenschlagerosion anzubieten. Die auf das Verfahren hin gerichtete Aufgabe betrifft ein einfaches Verfahren zur Herstellung einer Schutzschicht zur Vermeidung von Tropfenschlagerosion.

Gelöst wird die auf die Schutzschicht hin gerichtete Aufgabe durch eine Schutzschicht gemäß Patentanspruch 1. Die auf das Verfahren hin gerichtete Aufgabe wird gelöst durch ein Verfahren gemäß Patentanspruch 9.

Die auf die Schutzschicht hin gerichtete erfindungsgemäße Lösung zeichnet sich dadurch aus, dass eine Schutzschicht aus einem hydrophilen Material eingesetzt wird. Hydrophile Substanzen sind Substanzen, die die Eigenschaft haben, wasseranziehend zu sein. Das Gegenteil von hydrophilen Substanzen sind hydrophobe Substanzen, die wasserabstoßende Eigenschaften aufweisen. Erfindungsgemäß ist das hydrophile Material derart ausgebildet, dass ein Wasserfilm auf dem hydrophilen Material entstehbar ist. Ein durch Betriebsbedingungen entstandenes Wassertröpfchen wird in einem Anfangsbetriebszustand mit dem hydrophilen Material derart in Kontakt treten, dass die Wassertröpfchen von diesem hydrophilen Material angezogen werden und bis zu einer Sättigung das Material benetzt. Die Folge ist, dass jeder weiterfolgende Wassertropfen, der auf diese Schutzschicht trifft, nicht mehr von dem hydrophilen Material aufgesaugt werden kann, was zur Folge hat, dass ein Wasserfilm auf dem hydrophilen Material entsteht. Ein nachfolgender Wassertropfen stößt auf diesen Wasserfilm auf. Da in der Regel die Geschwindigkeiten dieser Wassertröpfchen hoch sind, wird der aufprallende Wassertropfen durch den Wasserfilm abgestoßen. Eine schädigende Tropfenschlagerosion wird dadurch vermieden, da der Wassertropfen das zu schützende Material, das auch als Substrat bezeichnet wird, nicht berührt.

Die auf das Verfahren hin gerichtete Aufgabe zeichnet sich dadurch aus, dass die erfindungsgemäße Schutzschicht in einem elektrochemischen Prozess auf einem Substrat aufgebracht wird.

In den Unteransprüchen sind vorteilhafte Weiterbildungen angegeben.

So wird in einer ersten vorteilhaften Weiterbildung das hydrophile Material aus einer Vielzahl von Röhrchen ausgebildet. Da diese Röhrchen aus einem hydrophilen Material ausgebildet sind, wird Wasser in die Röhrchen angezogen, so dass ab einem gewissen Betriebszustand die Vielzahl von Röhrchen mit Wasser gefüllt ist und ein zusätzlicher Wassertropfen zu einem Wasserfilm auf den Röhrchen führt. Dieser Wasserfilm ist letztendlich die schützende Schicht des Substrats vor den weiteren auftreffenden Tropfen.

In einer weiteren vorteilhaften Weiterbildung ist die Schutzschicht auf einem Substrat angeordnet, wobei die Röhrchen senkrecht zu dem Substrat gerichtet sind. Eine Anordnung der Röhrchen senkrecht zu dem Substrat ist aus mechanischen Gründen günstig, da eine schnelle Bewegung des Substrats zu einer Fliehkraft führt und eine senkrechte Anordnung der Röhrchen dazu vorteilhaft ist.

In einer vorteilhaften Weiterbildung weisen die Röhrchen einen Innendurchmesser zwischen 10nm und 100nm auf. Röhrchen mit solch geringen Durchmessern können auch als Nano-Röhrchen (nano tubes) bezeichnet werden. Der Innendurchmesser dieser Röhrchen ist derart, dass Wasser durch die hydrophilen Eigenschaften der Röhrchen in den Innendurchmesser gezogen wird und zusätzlich zu dem Wasserfilm die Stabilität der Röhrchen eine wirksame Schutzschicht zur Vermeidung von Tropfenschlagerosion bildet.

Die Röhrchen sind in einer vorteilhaften Weiterbildung aus Titaniumdioxid ausgebildet. Titaniumdioxid ist insbesondere auf einem aus einer Titan-Legierung ausgebildeten Substrat eine geeignete Materialauswahl. Die Materialeigenschaften von Titaniumdioxid und einer Titan-Legierung unterscheiden sich nicht grundsätzlich voneinander. Vorteilhafterweise wird die Schutzschicht auf eine Turbineschaufel, insbesondere eine Turbinenlaufschaufel angeordnet. Insbesondere in Niederdruck-Dampfturbinen wird eine solche Turbinenlaufschaufel eingesetzt. Da die Dimensionen der Turbinenlaufschaufeln in den herkömmlichen Niederdruck-Dampfturbinen derart sind, dass die Längen der Turbinenschaufeln vergleichsweise lang sind, wird Titan als Material eingesetzt.

Die Erfindung wird anhand eines Ausführungsbeispiels in den Figuren näher erläutert. Die Figuren sollen die Erfindung in schematischer Weise darstellen. Bauteile mit gleichen Bezugszeichen weisen im Regelfall die gleichen Funktionen auf. Es zeigen:
- Figur 1: eine Querschnittsansicht eines Teils einer Niederdruck-Dampfturbine;
- Figur 2: einen Querschnitt einer Turbinenschaufel;
- Figur 3: eine schematische Darstellung der erfindungsgemäßen Schutzschicht;
- Figur 4: eine Prinzipdarstellung eines Herstellungsverfahrens der Schutzschicht;
- Figur 5: eine weitere schematische Darstellung eines Verfahrens zur Herstellung der erfindungsgemäßen Schutzschicht.

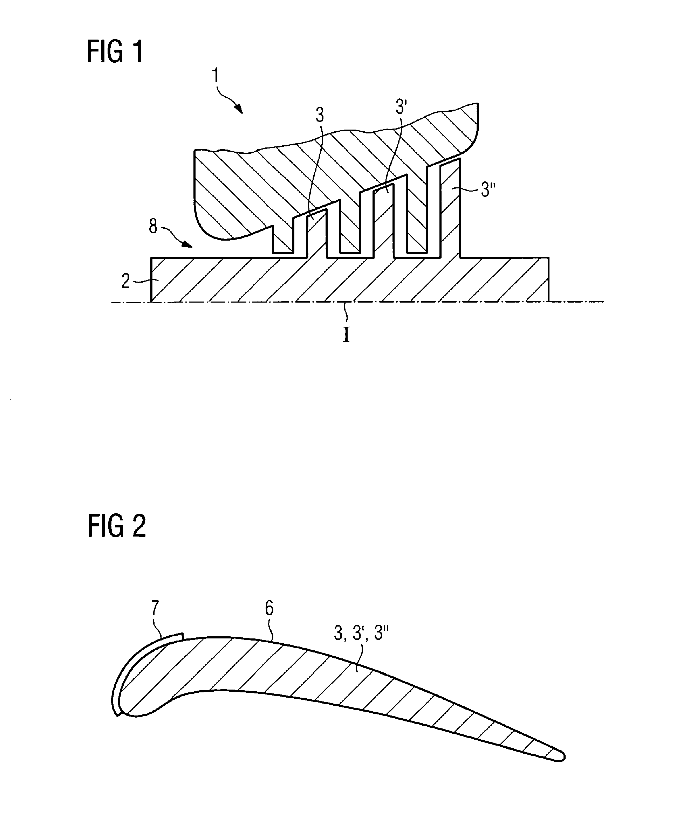

In der Figur 1 bedeutet 1 eine Dampfturbine, von der jeweils nur ein Teil dargestellt ist. Im Einzelnen ist jeweils ein Rotor 2 mit Rotationsachse I vorhanden, auf dem sich einzelne Laufschaufelreihen 3, 3', ... befinden, wobei speziell drei Laufschaufelreihen 3, 3', 3" angedeutet sind. Korrespondierend dazu ist ein Statorteil 4 mit zugehörigen Leitschaufeln 5, 5', 5" vorhanden. Es sind auch Anordnungen mit mehr oder weniger Schaufelreihen denkbar.

Über eine Zuleitung 8 erfolgt der Dampfzustrom. Der Dampfstrom wird in die Anordnung aus Statorteil 4 und Rotor 2 mit den Laufschaufeln 3, 3', 3" geleitet, wodurch über die Umwandlung von Strömungsenergie in mechanische Energie der Rotor 2 in Drehung versetzt wird. Damit kann beispielsweise ein mechanisch angeordneter Generator oder auch eine Arbeitsmaschine betrieben werden.

Beim oder nach dem Einbringen des Dampfes in die Anordnung gemäß Figur 1 kondensiert der Dampf hauptsächlich in Form kleiner Tröpfchen. Diese Tropfen prallen im Betrieb mit hohen Geschwindigkeiten auf die Oberfläche der Laufschaufeln 3, 3', 3" und verursachen eine so genannte Tropfenschlagerosion, bei der ein Materialabtrag in der Oberfläche der Laufschaufeln 3, 3', 3" erfolgt.

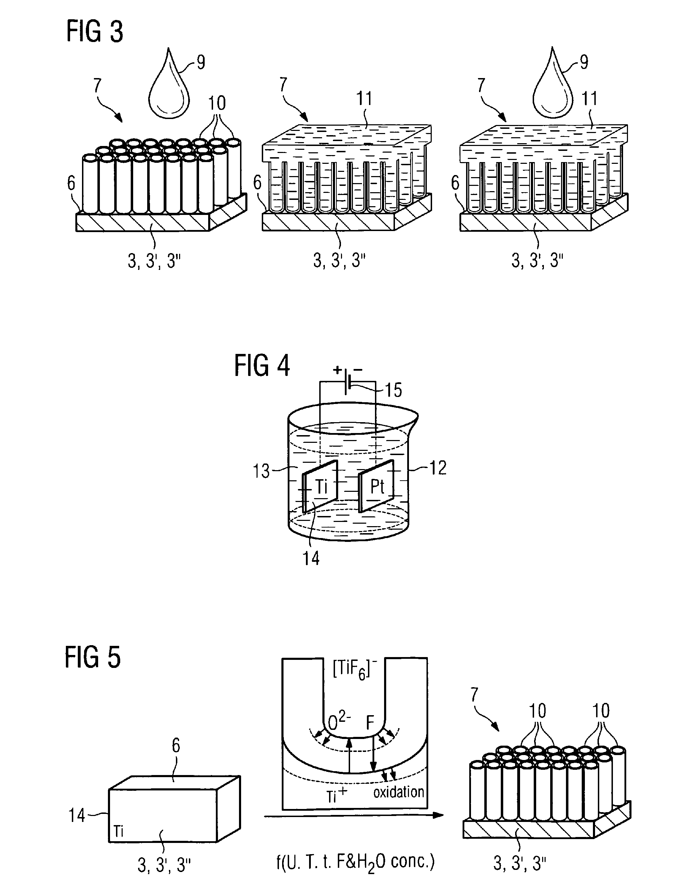

Die Figur 2 zeigt eine Laufschaufel 3, 3', 3" im Querschnitt. Auf diese Laufschaufel 3, 3', 3" wird auf deren Oberfläche 6 eine Schutzschicht 7 zur Vermeidung von Tropfenschlagerosion angeordnet. Diese Schutzschicht 7 ist aus einem hydrophilen Material ausgebildet, wobei dieses hydrophile Material derart ist, dass ein Wasserfilm auf dem hydrophilen Material entsteht. Dieses hydrophile Material werden aus selbstorganisierten Titanoxid (TiO₂) Nano-Röhrchen, die senkrecht zur Oberfläche 6 angeordnet sind, ausgebildet, was in der Figur 3 nun näher erläutert wird. Das linke Bild der Figur 3 zeigt einen Ausschnitt der Turbinenschaufel 3, 3', 3" und der erfindungsgemäßen Schutzschicht 7 auf der Oberfläche 6. Die Laufschaufeln 3, 3', 3" werden aus einer Titan-Legierung hergestellt. In einem Anfangszustand gelangt ein Tropfen 9 auf die Schutzschicht 7, die eine Vielzahl von Röhrchen 10 aufweist. Diese Röhrchen 10 haben einen Innendurchmesser zwischen 10nm und 100nm und können daher auch als Nano-Röhrchen bezeichnet werden. Diese Nano-Röhrchen 10 stehen im Wesentlichen senkrecht zu der Oberfläche 6 der Laufschaufel 3, 3', 3", wobei die Lauf schaufeln 3, 3', 3" als Substrat bezeichnet werden können. Die Röhrchen 10 sind aus Titanoxid (TiO₂) ausgebildet. Im mittleren Bild ist ein Zwischenzustand dargestellt, bei dem die Wassertropfen 9 durch die hydrophilen Eigenschaften der Nano-Röhrchen 10 in das Innere der Nano-Röhrchen 10 geleitet sind und schließlich einen Wasserfilm 11 auf den Röhrchen 10 bildet.

Im rechten Bild der Figur 3 ist schließlich ein Betriebszustand dargestellt, bei dem die Laufschaufel 3, 3', 3" vor weiteren Wassertropfen 9 dadurch geschützt wird, dass der Wassertropfen 9, der mit einer hohen Geschwindigkeit ankommt, an dem Wasserfilm 11 abprallt und somit die Oberfläche 6 des Substrats (Laufschaufel 3, 3', 3") nicht berührt. Der Wasserfilm 11 wirkt sozusagen als ein flüssiger Schockdämpfer für die weiteren Wassertropfen 9. Somit wird der Transfer der kinetischen Energie der Wassertropfen auf die Laufschaufel 3, 3', 3" verhindert.

Die Figur 4 zeigt beispielhaft die Herstellung derartiger Nano-Röhrchen 10. Die Nano-Röhrchen 10 werden in einer elektrochemischen Reaktion hergestellt. In einem Behälter 12 ist ein auf Wasser basierender oder organisch basierender Elektrolyt 13 angeordnet. In dem Elektrolyt ist ein Substrat 14 aus einer Titan-Legierung angeordnet. Über eine Stromquelle 15, die als Wechselstrom- oder Gleichstromquelle ausgebildet sein kann, werden schließlich über einen elektrochemischen Prozess die Nano-Röhrchen 10 hergestellt.

In der Figur 5 ist in schematischer Weise dargestellt, wie auf die Laufschaufel 3, 3', 3", das als Substrat bezeichnet werden kann und aus einer Titan-Legierung besteht, die Röhrchen 10 hergestellt werden. Zunächst wird das Substrat 14 in ein Bad angeordnet, in dem ein mittels eines elektrochemischen Prozesses, der in der Figur 5 in der Mitte in schematischer Weise dargestellt wird, zu einem Wachstum der Röhrchen 10 führt, die wie in der Figur 5 auf der rechten Seite zu einer regelmäßigen Anordnung der Röhrchen auf dem Substrat 14 führt. Die Röhrchen sind im Wesentlichen senkrecht zur Oberfläche angeordnet. Es hat sich gezeigt, dass in Ethylenglykol basierenden Elektrolyten eine selbstorganisierte Anordnung der Röhrchen erfolgt bei einer HF-Konzentrationsrate von im Wesentlichen 0,05% bis 3% und bei einer Spannung zwischen 10 Volt und 150 Volt. Die dabei entstandenen amorphen Nano-Röhrchen weisen einen Durchmesser zwischen 20nm und 240nm bei einer Wanddicke zwischen 10nm und 35nm. Die Schichtdicke der Röhrchen liegt hierbei zwischen 0,5µm und 250µm.

## Patentansprüche

1. Schutzschicht (7) zur Vermeidung von Tropfenschlagerosion,
wobei die Schutzschicht (7) ein hydrophiles Material umfasst,
wobei das hydrophile Material derart ausgebildet ist, dass ein Wasserfilm auf dem hydrophilen Material entstehbar ist.

2. Schutzschicht (7) nach Anspruch 1,
wobei das hydrophile Material aus einer Vielzahl an Röhrchen (10) ausgebildet ist.

3. Schutzschicht (7) nach Anspruch 2 und ein Substrat (14), wobei die Röhrchen (10) senkrecht zu dem Substrat (14) gerichtet sind,
wobei die Schutzschicht (7) auf dem Substrat (14) angeordnet ist.

4. Schutzschicht (7) nach Anspruch 2 oder 3,
wobei die Röhrchen (10) einen Innendurchmesser zwischen 10nm und 100nm aufweisen.

5. Schutzschicht (7) nach Anspruch 2, 3 oder 4,
wobei die Röhrchen (10) aus TiO₂ ausgebildet sind.

6. Schutzschicht (7) nach Anspruch 3,
wobei die Schutzschicht (7) auf eine Titan-Legierung als Substrat (14) aufgebracht ist.

7. Schutzschicht (7) nach einem der vorhergehenden Ansprüche und eine Turbinenschaufel,
wobei die Schutzschicht (7) auf einer Turbinenschaufel, insbesondere Turbinenlaufschaufel angeordnet ist.

8. Schutzschicht (7) nach Anspruch 7 und eine Dampfturbine, wobei die Turbinenschaufel zur Anordnung in der Dampfturbine ausgebildet ist.

9. Verfahren zur Herstellung einer Schutzschicht (7) nach einem der Ansprüche 1 bis 8,
wobei die Röhrchen (10) in einem elektronischen Prozess auf einem Substrat (14) aufgebracht werden.
